# EUROPÄISCHE PATENTSCHRIFT

(11) **EP 4 400 455 B1**
(45) Veröffentlichungstag und Bekanntmachung des Hinweises auf die Patenterteilung: **02.12.2026**
(21) Anmeldenummer: 24150730.0
(22) Anmeldetag: 08.01.2024
(51) Int. Cl.: B65G 47/08, B65B 3/00, B65B 21/06, B65G 47/28, B65G 47/52, B65G 54/02

(54) **BEHÄLTNISGRUPPIERSYSTEM UND VERFAHREN ZUM BETRIEB EINES BEHÄLTNISGRUPPIERSYSTEMS**
CONTAINER GROUPING SYSTEM AND METHOD FOR OPERATING A CONTAINER GROUPING SYSTEM
SYSTÈME DE REGROUPEMENT DE RÉCIPIENTS ET PROCÉDÉ DE FONCTIONNEMENT D'UN SYSTÈME DE REGROUPEMENT DE RÉCIPIENTS

(30) Priorität: 13.01.2023 DE 102023100776
(43) Veröffentlichungstag der Anmeldung: 17.07.2024
(73) Patentinhaber: Syntegon Technology GmbH, 70372 Stuttgart (DE)
(72) Erfinder: Bäuerle, Johannes, 74423 Obersontheim (DE); Schwandt, Matthias, 74599 Wallhausen (DE); Gran, Sebastian, 74564 Crailsheim (DE)
(74) Vertreter: Novagraaf Group

(56) Entgegenhaltungen:
- WO-A1-2020/243814
- DE-A1- 19 920 494
- US-A1- 2022 250 859

## Beschreibung

Die Erfindung betrifft ein Behältnisgruppiersystem mit den Merkmalen des Oberbegriffs des Patentanspruchs 1.

Aus der WO 2020/243814 A1 und der US 2022/250859 A1 sind Gruppiersysteme bekannt Die US 2022/250859 A1 offenbart ein Gruppiersystem, umfassend einen Vorratsspeicher, wobei Teile in dem Vorratsspeicher einen Teilevorrat bilden und in einer Anlieferungs-Konfiguration angeordnet sind, in welcher unterschiedliche Teilmengen der Teile einen der Anlieferungs-Konfiguration entsprechenden ersten Abstand zueinander aufweisen, ferner umfassend eine Transportvorrichtung zum Transport von in einem Teileträger angeordneten Teile entlang eines Transportwegs, wobei die Teile in dem Teileträger in einer Maschinenkonfiguration angeordnet sind, in welcher die unterschiedlichen Teilmengen von Teilen einen der Maschinenkonfiguration entsprechenden zweiten Abstand zueinander aufweisen, der zu dem der Anlieferungs-Konfiguration entsprechenden ersten Abstand verschieden ist, und wobei entlang des Transportwegs gesehen wenigstens ein Ladebereich mit einer Ladevorrichtung zur Beladung des Teileträgers mit Teilen vorgesehen ist, wobei das Gruppiersystem eine Überführungsvorrichtung zur Zuführung von Teilen aus dem Teilevorrat in einen Überführungsbereich aufweist, wobei die Teile in dem Überführungsbereich in der Anlieferungs-Konfiguration angeordnet sind, und wobei der Überführungsbereich und der Ladebereich über mindestens einen Anpassungsbereich hinweg zueinander beabstandet sind, wobei in dem mindestens einen Anpassungsbereich die Konfiguration der Teile zwischen der Anlieferungs-Konfiguration und der Maschinenkonfiguration änderbar ist, wobei in dem mindestens einen Anpassungsbereich wenigstens ein Stator und wenigstens zwei mit dem Stator elektromagnetisch gekoppelte Mover angeordnet sind, wobei die Mover relativ zu einer Antriebsfläche unabhängig voneinander bewegbar antreibbar sind, wobei durch Änderung des Abstands zwischen den Movern die Teile wahlweise in die Maschinenkonfiguration oder in die Anlieferungs-Konfiguration überführbar sind.

Bei derartigen Behältnisgruppiersystemen ist es zur Beladung des Behältnisträgers notwendig, die unbefüllten Behältnisse nach der Entnahme aus dem Vorratsspeicher von der Anlieferungs-Konfiguration in die Maschinenkonfiguration zu überführen. Außerdem werden die Behältnisse im Anschluss an die Befüllung aus dem Behältnisträger entladen und vorzugweise einem Vorratsbehälter zugeführt. Dabei ist es häufig notwendig, die Behältnisse aus der Maschinenkonfiguration in die Anlieferungs-Konfiguration zurückzuüberführen.

Bei bekannten Behältnisgruppiersystemen werden die Behältnisse zur Überführung der Konfiguration mittels der Ladevorrichtung insbesondere vereinzelt oder als (kleine) Teilmenge aufgenommen und bei der Abgabe aus der Ladevorrichtung in den Behältnisträger bzw. den Vorratsbehälter entsprechend der Maschinenkonfiguration oder Anlieferungs-Konfiguration positioniert. Die Ladevorrichtung kann hierfür beispielsweise als Roboter ausgebildet sein, welcher die Behältnisse haltend aufnimmt und transportiert.

Nachteilig an derartigen Behältnisgruppiersystemen ist, dass die Beladung bzw. Entladung des Behältnisträgers mit einer Vielzahl einander folgender Beladungs- bzw. Entladungsvorgänge korreliert.

Da die Behältnisse also nur vereinzelt oder jeweils als (kleine) Teilmenge zwischen dem Behältnisträger und dem Behältnisvorrat bzw. dem Vorratsbehälter transportiert werden können, sind mehrere, zeitlich einander folgende Transportbewegungen der Ladevorrichtung (bspw. des Roboters) notwendig. Dies beansprucht viel Zeit.

Hiervon ausgehend liegt der Erfindung die Aufgabe zugrunde, ein effizienteres Behältnisgruppiersystem anzugeben.

Die Aufgabe wird durch ein Behältnisgruppiersystem mit den Merkmalen des Patentanspruchs 1 gelöst.

Die Überführungsvorrichtung ermöglicht die Zuführung einer großen Anzahl von Behältnissen in den Überführungsbereich sowie die Übergabe der Behältnisse an die unterschiedlichen Aufnahmeeinrichtungen der unterschiedlichen Mover.

Die Mover dienen zum einen dem Transport der Behältnisse in den Ladebereich. Zum anderen wird den Movern immanente Bewegungsfunktion genutzt, um auf einfache Art und Weise die Konfiguration der in den Aufnahmeeinrichtungen aufgenommenen Behältnisse anzupassen. Hierfür ändert sich bei der Bewegung der Mover durch den mindestens einen Anpassungsbereich hindurch der Abstand zwischen den Movern von einem ersten Abstand, welcher mit der Anlieferungs-Konfiguration der Behältnisse einhergeht, zu einem zweiten Abstand, welcher mit der Maschinenkonfiguration der Behältnisse einhergeht.

Die Mover werden vorzugsweise außerdem zum Transport der befüllten Behältnisse aus dem Ladebereich in den Überführungsbereich genutzt. Auch in diesem Fall erfolgt die Anpassung der Konfiguration besonders einfach und simultan für alle in den Aufnahmeeinrichtungen aufgenommenen Behältnissen während der Bewegung der Mover durch den mindestens einen Anpassungsbereich hindurch.

Die Erfindung ermöglicht also die gleichzeitige Anpassung der Konfiguration der Behältnisse, und zwar für eine - im Vergleich zu bekannten Behältnisgruppiersystemen - erhöhte Anzahl von Behältnissen.

Besonders bevorzugt weisen die Aufnahmeeinrichtungen gemeinsam eine Gesamtzahl von Aufnahmen auf, welche jeweils zur Aufnahme eines Behältnisses dienen, wobei diese Gesamtzahl mindestens so hoch ist wie eine Gesamtzahl von Behältnisträgeraufnahmen des Behältnisträgers, wobei die Behältnisträgeraufnahmen jeweils zur Aufnahme eines Behältnisses dienen. Dies stellt sicher, dass der Behältnisträger mit nur einem einzigen Beladungsvorgang bis zu seiner maximalen Aufnahmekapazität mit Behältnissen beladen werden kann bzw. mit nur einem einzigen Entladungsvorgang entladen werden kann.

Bei einer bevorzugten Ausführungsform ist vorgesehen, dass die Transportvorrichtung einen Transportmover umfasst, der zum Transport des Behältnisträgers entlang des Transportwegs dient und mittels des mindestens einen Stators oder mittels eines weiteren Stators antreibbar ist. Dies stellt eine besonders flexible Möglichkeit dar, den Behältnisträger entlang des Transportweges zu bewegen.

Besonders bevorzugt umfasst die Transportvorrichtung eine Mehrzahl von Behältnisträgern. Dies ermöglicht eine besonders effiziente Benutzung des Behältnisgruppiersystems, da unterschiedliche Betriebszustände gleichzeitig realisierbar sind. Auf diese Weise kann beispielsweise - während der Beladung eines ersten Behältnisträgers in dem Ladebereich - ein weiterer Behältnisträger entlang des Transportwegs in einer Station zur Befüllung der Behältnisse angeordnet sein.

Ferner ist es bevorzugt, dass die Überführungsvorrichtung und/oder die Ladevorrichtung entlang einer zu der Antriebsfläche senkrechten Hubachse antreibbar ist oder sind. Dies ermöglicht eine besonders einfache Beladung und Entladung des Behältnisträgers sowie eine besonders einfache Aufnahme und Entnahme der Behältnisse aus den Aufnahmeeinrichtungen der Mover. Insbesondere können an der Ladevorrichtung oder der Überführungsvorrichtung gehaltene Behältnisse durch eine Hebebewegung der Ladevorrichtung oder der Überführungsvorrichtung aus Behältnisträgeraufnahmen des Behältnisträgers entladen oder aus den Aufnahmeeinrichtungen der Mover entnommen werden. Dementsprechend ist es durch ein Absenken der Ladevorrichtung oder der Überführungsvorrichtung möglich, die Behältnisse in die Behältnisträgeraufnahmen des Behältnisträgers zu laden oder an die Aufnahmeeinrichtungen der Mover abzugeben.

Insbesondere ist es bevorzugt, dass die Überführungsvorrichtung zumindest eine erste Halteeinrichtung mit kammartig und der Anlieferungs-Konfiguration entsprechend angeordneten Zinken aufweist, wobei jeweils zueinander benachbarte Zinken zur Aufnahme jeweils einer der Teilmengen der Behältnisse dienen. Dies stellt eine besonders einfache Möglichkeit dar, die Behältnisse in deren Anlieferungs-Konfiguration in die Überführungsvorrichtung aufzunehmen und an der Überführungsvorrichtung zu halten.

Des Weiteren ist es bevorzugt, dass die Überführungsvorrichtung zwei erste Halteeinrichtungen aufweist und dass die Überführungsvorrichtung um eine zu der Antriebsfläche senkrecht verlaufenden Drehachse drehbar antreibbar ist. Hierdurch wird eine möglichst effiziente Zuführung von unbefüllten Behältnissen und Abführung von befüllten Behältnissen sichergestellt. Beispielsweise ist es möglich, dass eine der Halteeinrichtungen in dem Überführungsbereich und gleichzeitig die andere Halteeinrichtung im Bereich eines Behältnisvorrats oder Vorratsbehälters angeordnet ist. Hierdurch ist es bspw. möglich, unbefüllte Behältnisse im dem Überführungsbereich an die Aufnahmevorrichtungen der Mover zu übergeben und gleichzeitig bereits befüllte Behältnisse aus der anderen Halteeinrichtung zu entnehmen und dem Vorratsbehälter zuzuführen.

Besonders bevorzugt weist die Ladevorrichtung eine zweite Halteeinrichtung mit kammartig und der Maschinenkonfiguration entsprechend angeordneten Zinken auf, wobei jeweils zueinander benachbarte Zinken zur Aufnahme jeweils einer der Teilmengen der Behältnisse dienen. Dies stellt eine besonders einfache Möglichkeit dar, die Behältnisse in deren Maschinenkonfiguration in die Ladevorrichtung aufzunehmen und an der Ladevorrichtung zu halten.

Besonders bevorzugt ist, dass entlang des Transportwegs gesehen zwei Ladebereiche vorgesehen sind, wobei ein erster Ladebereich über einen ersten Anpassungsbereich hinweg zu dem Überführungsbereich beabstandet ist und wobei ein zweiter Ladebereich über einen zweiten Anpassungsbereich hinweg zu dem Überführungsbereich beabstandet ist. Die Anordnung von zwei Ladebereichen entlang des Transportwegs erhöht die Flexibilität und die Effizienz des Behältnisgruppiersystems. Insbesondere ist eine gleichzeitige Anordnung des Behältnisträgers und der Mover in jeweils einem Ladebereich möglich. Dies geht mit der Möglichkeit einher, dass die Beladung bzw. Entladung des Behältnisträgers insbesondere gleichzeitig mit der Aufnahme oder Abgabe der Behältnisse aus den Aufnahmeeinrichtungen stattfindet.

Ferner ist es bevorzugt, dass die Behältnisse in dem ersten Anpassungsbereich aus der Anlieferungs-Konfiguration in die Maschinenkonfiguration überführbar sind und dass die Behältnisse in dem zweiten Anpassungsbereich aus der Maschinenkonfiguration in die Anlieferungs-Konfiguration überführbar sind. Hierdurch wird eine Trennung der Beladefunktion und Entladefunktion der zwei Ladebereiche erreicht, wobei der Behältnisträger in dem ersten Ladebereich beladen wird und in dem zweiten Ladebereich entladen wird. Diese Funktionstrennung ermöglicht einen besonders zuverlässigen Betrieb des Behältnisgruppiersystems.

Die eingangs genannte Aufgabe wird auch durch ein Verfahren zum Betrieb eines Behältnisgruppiersystems gelöst, welches die Merkmale des nebengeordneten Verfahrensanspruchs umfasst.

Für den Fall, dass das Behältnisgruppiersystem zwei Anpassungsbereiche und zwei Ladebereiche aufweist, ist es bevorzugt, dass - während die Behältnisse in dem ersten Anpassungsbereich aus der Anlieferungs-Konfiguration in die Maschinenkonfiguration überführt werden - gleichzeitig befüllte Behältnisse aus dem Behältnisträger entladen und in den zweiten Ladebereich übergeben werden. Hierdurch wird ein besonders effizienter Betrieb des Behältnisgruppiersystems erreicht.

Weitere Merkmale und Vorteile sind Gegenstand der nachfolgenden Beschreibung und der zeichnerischen Darstellung von Ausführungsformen.

In der Zeichnung zeigt
- Fig. 1: eine Draufsicht einer Ausführungsform eines Behältnisgruppiersystems zur Befüllung einer Mehrzahl von Behältnissen;
- Fig. 2: eine perspektivische Ansicht eines Anpassungsbereichs des Behältnisgruppiersystems, mit einer Mehrzahl von Movern mit jeweiligen Aufnahmeeinrichtungen zur Aufnahme von Teilmengen der Behältnisse;
- Fig. 3: eine Seitenansicht des Anpassungsbereichs entsprechend einer in Fig. 2 mit III bezeichneten Sichtrichtung;
- Fig. 4: eine Draufsicht des Anpassungsbereichs, wobei die Mover einen Abstand aufweisen, welcher mit einer Anlieferungs-Konfiguration der Behältnisse einhergeht;
- Fig. 5: eine Draufsicht des Anpassungsbereichs, wobei die Mover einen Abstand aufweisen, welcher mit einer Maschinenkonfiguration der Behältnisse einhergeht;
- Fig. 6 bis 10: einen in Fig. 1 mit VI bezeichneten Ausschnitt in vergrößerter Darstellung während verschiedener Phasen des Betriebs des Behältnisgruppiersystems.

Ein Behältnisgruppiersystem ist in den Zeichnungen insgesamt mit dem Bezugszeichen 10 bezeichnet.

Das Behältnisgruppiersystem 10 ist insbesondere Teil eines pharmazeutischen oder nahrungsmitteltechnischen Behältnisfüllsystems.

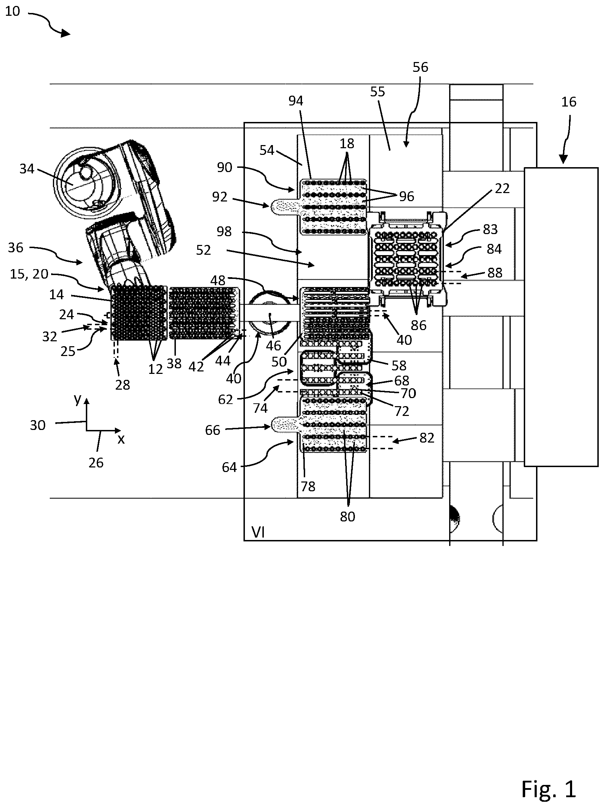

Das Behältnisgruppiersystem 10 dient insbesondere der Zuführung von unbefüllten Behältnissen 12 aus einem Vorratsspeicher 14 an eine an sich bekannte und daher in der Zeichnung nur schematisch dargestellte Füllvorrichtung 16. Die in dem Vorratsspeicher 14 angeordneten, unbefüllten Behältnisse 12 bilden einen Behältnisvorrat 15. Das Behältnisgruppiersystem 10 dient außerdem dazu, mittels der Füllvorrichtung 16 befüllte Behältnisse 18 abzuführen und in einem Vorratsbehälter 20 anzuordnen. Der Behältnisvorrat 15 und der Vorratsbehälter 20 können wechselweise dieselbe Position einnehmen, vergleiche Fig. 1, oder aber an unterschiedlichen Positionen angeordnet sein.

Bei den Behältnissen 12, 18 handelt es sich insbesondere um pharmazeutische Behältnisse wie beispielsweise Vials, Spritzen oder Karpulen. Bei dem Vorratsspeicher 14 handelt es sich insbesondere um ein Tray oder ein Nest. Es ist möglich, dass der Vorratsspeicher 14 ein oder den Vorratsbehälter 20 für befüllte Behältnisse 18 bildet.

Das Behältnisgruppiersystem weist einen Behältnisträger 22 auf, der zur Aufnahme zu befüllender Behältnisse 12 und befüllter Behältnisse 18 dient. Der Behältnisträger 22 dient dazu, die Behältnisse 12, 18 entlang eines Transportwegs zu der Füllvorrichtung 16 hin bzw. von der Füllvorrichtung 16 weg zu transportieren.

Während des Betriebs des Behältnisgruppiersystems 10 ist es notwendig, die Anordnung (gleich Konfiguration des Abstands unterschiedlicher Teilmengen) der Behältnisse 12, 18 von einer - dem Vorratsspeicher 14 zugeordneten - Anlieferungs-Konfiguration in eine - dem Behältnisträger 22 zugeordnete - Maschinenkonfiguration zu überführen. Diese Maschinenkonfiguration ist beispielsweise durch die Ausgestaltung der Füllvorrichtung 16 vorgegeben, die eine Vielzahl von einzelnen, zueinander beabstandeten und gleichzeitig betreibbaren Füllstationen aufweisen kann.

Im Folgenden wird der weitere Aufbau und die Funktionsweise des Behältnisgruppiersystems 10 ausgehend von einem Ausgangszustand mit unbefüllten Behältnissen 12 erläutert.

In dem Ausgangszustand sind die unbefüllten Behältnisse 12 in dem Vorratsspeicher 14 aufgenommen, vergleiche Fig. 1. Die unbefüllten Behältnisse 12 sind insbesondere auf einer Bodenfläche des Vorratsspeichers 14 abgestellt und werden mittels einer seitlichen Berandung in dem Vorratsspeichers 14 gesichert. Vorzugsweise erstrecken sich die unbefüllten Behältnisse 12 mit einer Teillänge über die Berandung des Vorratsspeichers 14 nach oben hinaus und weisen an einem oberen Ende einen seitlich hervorstehenden Behältniskragen (an sich bekannt und in der Zeichnung nicht dargestellt) auf.

In dem Vorratsspeicher 14 sind die unbefüllten Behältnisse 12 in der Anlieferungs-Konfiguration angeordnet, wobei die Anlieferungs-Konfiguration durch einen spezifischen Abstand zwischen unterschiedlichen Teilmengen 24, 25 der unbefüllten Behältnisse 12 charakterisiert ist. Beispielsweise ist eine erste Teilmenge 24 durch unbefüllte Behältnisse 12 gebildet, welche entlang einer ersten Reihe angeordnet sind. Eine zweite Teilmenge 25 ist beispielsweise durch unbefüllte Behältnisse 12 gebildet, welche entlang einer zweiten Reihe angeordnet sind.

Vorzugsweise sind die erste Reihe und die zweite Reihe zueinander benachbart. Vorzugsweise verlaufen die erste Reihe und die zweite Reihe zueinander parallel. Beispielsweise erstrecken sich die beiden Reihen in einer x-Richtung 26.

Innerhalb einer der Reihen weisen die Behältnisse relativ zueinander einen Versatz auf. Es ist bevorzugt, dass die Behältnisse 12 innerhalb einer Reihe zueinander äquidistant angeordnet sind.

Es ist möglich, dass die Behältnisse 12 von zwei zueinander benachbarten Reihen zueinander versetzt angeordnet sind, bspw. (in x-Richtung 26 gesehen) einen Versatz 28 relativ zueinander aufweisen.

Die erste Reihe und die zweite Reihe weisen relativ zueinander einen für die Anlieferungs-Konfiguration spezifischen ersten Abstand 32 auf, bspw. in einer y-Richtung 30.

Der Vorratsspeicher 14 wird vorzugsweise an einem Gelenkarmroboter 34 gehalten und ist mittels des Gelenkarmroboters 34 innerhalb eines Arbeitsraums 36 bewegbar.

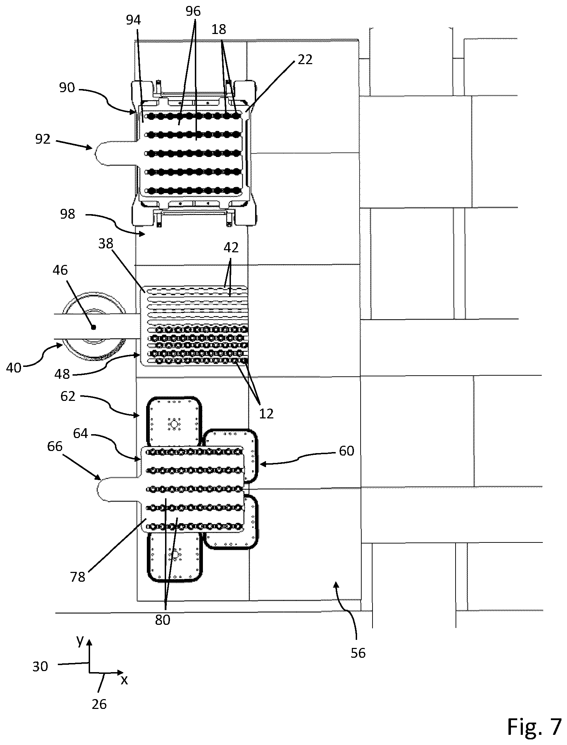

Zur Entnahme der unbefüllten Behältnisse 12 aus dem Vorratsspeicher 14 ist eine erste Halteeinrichtung 38 einer Überführungsvorrichtung 40 vorgesehen (vgl. Fig. 1 und auch bspw. Fig. 7). Die erste Halteeinrichtung 38 umfasst kammartige und der Anlieferungs-Konfiguration entsprechend angeordnete Zinken 42, wobei zwischen benachbarten Zinken 42 jeweils freie Zwischenräume ausgebildet sind. Die der Anlieferungs-Konfiguration entsprechende Anordnung der Zinken 42 geht damit einher, dass benachbarte Zwischenräume zueinander einen Abstand 44 aufweisen, welcher mit dem ersten Abstand 32 der unbefüllten Behältnisse 12 in dem Vorratsspeicher 14 übereinstimmt. Die Breite der einzelnen Zwischenräume in der ersten Halteeinrichtung 38 ist insbesondere auf eine Breite der Behältnisse 12, 18 abgestimmt, wobei die Breite eines Zwischenraums vorzugsweise geringfügig größer ist als die Breite oder ein Durchmesser der Behältnisse 12, 18.

Zur Übergabe der unbefüllten Behältnisse 12 an die erste Halteeinrichtung 38 wird der Vorratsspeicher 14 mittels des Gelenkarmroboters 34 in die Nähe der ersten Halteeinrichtung 38 verbracht, sodass die unbefüllten Behältnisse 12 relativ zu den Zinken 42 bzw. zu den Zwischenräumen ausgerichtet werden. Mit einer Bewegung des Gelenkarmroboters 34 in x-Richtung 26 werden die unbefüllten Behältnisse 12 in die jeweiligen Zwischenräume der ersten Halteeinrichtung 38 eingeschoben, wobei jeweils die über die Berandung des Vorratsspeichers 14 nach oben überragende Teillänge eines unbefüllten Behältnisses 12 in einem der Zwischenraum aufgenommen wird.

Die Anordnung der unbefüllten Behältnisse 12 in der Anlieferungs-Konfiguration bleibt während der Übergabe an die Überführungsvorrichtung 40 erhalten, sodass insbesondere genau eine Teilmenge 24 der unbefüllten Behältnisse 12 in genau einem Zwischenraum aufgenommen ist.

Die Überführungsvorrichtung 40 ist entlang einer senkrecht zu der Bodenfläche des Vorratsspeichers 14 verlaufenden Hubachse bewegbar. Durch diese Bewegbarkeit ist es möglich, die unbefüllten Behältnisse 12 mittels einer Hubbewegung der Überführungsvorrichtung 40 aus dem Vorratsspeicher 14 zu entnehmen. Die unbefüllten Behältnisse 12 stützen sich hierbei mit ihrem Behältniskragen an den Zinken 42 ab und werden in der Halteeinrichtung 38 hängend gehalten.

Die Überführungsvorrichtung 40 ist ferner um eine Drehachse 46 drehbar und führt die in der ersten Halteeinrichtung 38 gehaltenen, unbefüllten Behältnisse 12 mittels einer 180°-Drehung einem Überführungsbereich 48 des Behältnisgruppiersystems 10 zu.

Die Überführungsvorrichtung 40 umfasst vorzugsweise außerdem eine weitere erste Halteeinrichtung 50, sodass bei der Anordnung der ersten Halteeinrichtung 38 in dem Überführungsbereich 48 die weitere erste Halteeinrichtung 50 im Arbeitsraum 36 des Gelenkarmroboters 34 angeordnet ist.

In dem Überführungsbereich 48 des Behältnisgruppiersystems 10 werden die unbefüllten Behältnisse 12 oberhalb einer Oberseite 52 wenigstens eines Stators 54 in der ersten Halteeinrichtung 38 der Überführungsvorrichtung 40 gehalten, vergleiche Fig. 1 2 und 3. Die Oberseite 52 des wenigstens einen Stators 54 bildet eine untere Begrenzung des Überführungsbereichs 48.

Das Behältnisgruppiersystem 10 weist eine Antriebsfläche 56 zur Anordnung nachfolgend beschriebener Mover auf. Die Antriebsfläche ist beispielsweise durch die Oberseite eines einzigen Stators 54 gebildet. Es ist aber auch möglich, dass die Oberseite des Stators 54 nur einen Teil der Antriebsfläche 56 bildet. In diesem Fall sind weitere Teile der Antriebsfläche 56 durch jeweilige Oberseiten weiterer Statoren gebildet, bspw. durch einen zu dem Stator 54 benachbarten weiteren Stator 55.

Auf der Antriebsfläche 56 sind eine Mehrzahl von elektromagnetisch mit den Statoren 54, 55 gekoppelte Mover 58 angeordnet, wobei innerhalb der Mover 58 angeordnete Permanentmagnete in an sich bekannter Weise mit bestromten Spulen der Statoren 54, 55 zusammenwirken und die Mover 58 in einem schwebenden Zustand oberhalb der Antriebsfläche 56 halten.

Die Mover 58 sind in dem schwebenden Zustand über die Erstreckung der Antriebsfläche 56 hinweg bewegbar. Während des Betriebs des Behältnisgruppiersystems 10 bilden die Mover 58 eine Movergruppe 60, welche mindestens zwei Mover 58 umfasst, beispielsweise fünf Mover 58. Insbesondere entspricht die Anzahl der Mover 58 einer Anzahl von Reihen von Behältnisträgeraufnahmen 86 des Behältnisträgers 22.

In dem Behältnisgruppiersystem 10 dienen die Mover 58 unter anderem dem Transport der Behältnisse 12, 18 über die Antriebsfläche 56 hinweg. Insbesondere transportieren die Mover 58 die unbefüllten Behältnisse 12 aus dem Überführungsbereich 48 durch einen ersten Anpassungsbereich 62 hindurch in einen ersten Ladebereich 64.

In dem ersten Ladebereich 64 ist eine erste Ladevorrichtung 66 angeordnet. Die erste Ladevorrichtung 66 dient insbesondere zur Beladung des Behältnisträgers 22 mit unbefüllten Behältnissen 12.

Wie vorstehend erläutert, ist es zur Beladung des Behältnisträgers 22 notwendig, dass die unbefüllten Behältnisse 12 in der Maschinenkonfiguration angeordnet sind.

Die Änderung der Konfiguration der unbefüllten Behältnisse 12 aus ihrer Anlieferungs-Konfiguration in die Maschinenkonfiguration findet während des Transports der unbefüllten Behältnisse 12 mittels der Mover 58 in dem ersten Anpassungsbereich 62 statt.

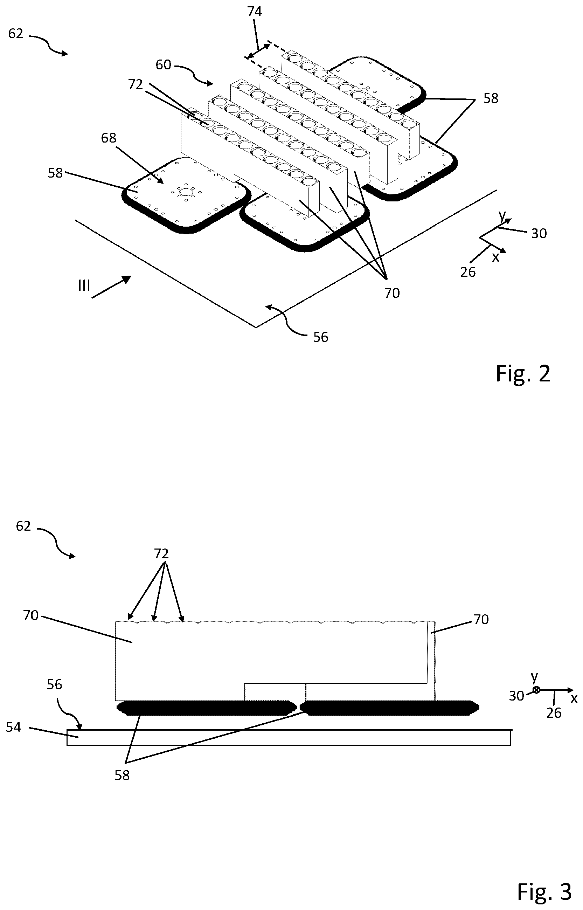

Zu diesem Zweck ist auf einer der Antriebsfläche 56 abgewandten Seite 68 eines jeden Movers 58 der Movergruppe 60 jeweils eine Aufnahmeeinrichtung 70 angeordnet, vergleiche Fig. 2 und Fig. 3.

Die Aufnahmeeinrichtungen 70 unterschiedlicher Mover 58 erstrecken sich vorzugsweise parallel zueinander, bspw. in x-Richtung 26. Die Aufnahmeeinrichtungen 70 weisen jeweils eine Mehrzahl von separaten Aufnahmen 72 zur Aufnahme jeweils eines der Behältnisse 12, 18 auf. Die Anzahl der Aufnahmen 72 einer Aufnahmeeinrichtung 70 eines Movers 58 stimmt hierbei vorzugsweise mit der Anzahl von Behältnissen einer der Teilmengen 24, 25 der unbefüllten Behältnisse 12 überein.

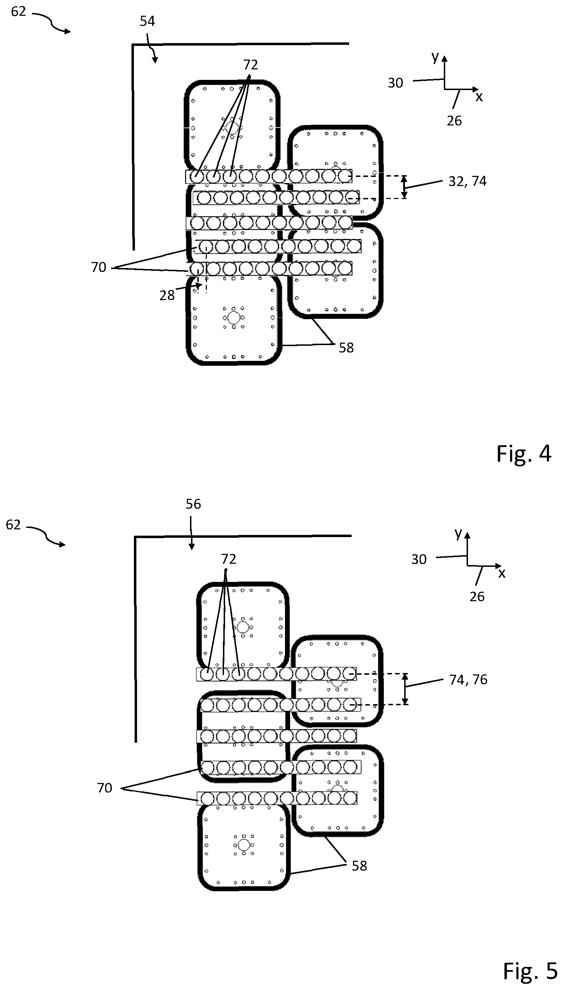

Die Position und Orientierung der Aufnahmeeinrichtungen 70 relativ zueinander ist durch Steuerung der Position und Orientierung der Mover 58 der Movergruppe 60 einstellbar. Insbesondere können die Mover 58 derart angeordnet werden, dass die Anordnung der Aufnahmen 72 der Aufnahmeeinrichtungen 70 der Mover 58 der Movergruppe 60 mit der Anordnung der unbefüllten Behältnisse 12 in der Anlieferungs-Konfiguration übereinstimmt, vergleiche Fig. 4. Die Aufnahmen 72 der Aufnahmeeinrichtungen 70 weisen (in y-Richtung 30) einen Abstand 74 zueinander auf, welcher mit dem ersten Abstand 32 übereinstimmt. Die Aufnahme 72 von zueinander benachbarten Aufnahmeeinrichtungen 70 sind in x-Richtung 26 zueinander versetzt angeordnet, wobei dieser Versatz dem ggf. vorhandenen Versatz 28 von unbefüllten Behältnissen 12 in dem Vorratsspeicher 14 bzw. dem Versatz der Anordnung von unbefüllten Behältnissen 12 an der ersten Halteeinrichtung 38 entspricht.

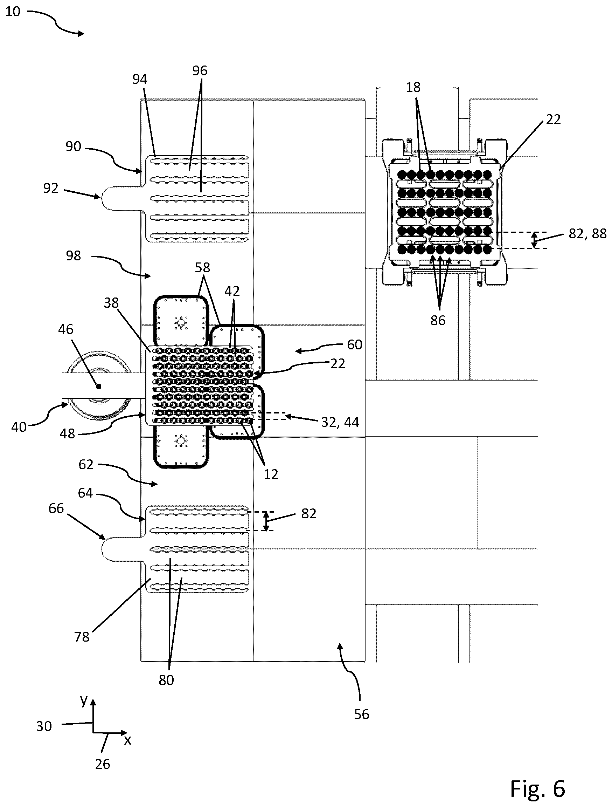

Die Mover 58 der Movergruppe 60 werden so ausgerichtet, dass die Aufnahmen 72 der Aufnahmeeinrichtungen 70 unterhalb der in der ersten Halteeinrichtung 38 gehaltenen, unbefüllten Behältnissen 12 angeordnet sind. Anschließend werden die unbefüllten Behältnisse 12 durch Absenken der Überführungsvorrichtung 40 in die Aufnahmen 72 eingeführt und in diesen aufgenommen, vergleiche Fig. 6.

Jeder der Mover 58 nimmt jeweils eine der Teilmengen 24, 25 der unbefüllten Behältnisse 12 auf. Die Movergruppe 60 ist also in der Lage, eine der Anzahl der Mover 58 der Movergruppe 60 entsprechende Anzahl von Teilmengen der Behältnisse 12 aufzunehmen. Es ist möglich, dass eine übrige Menge von Behältnissen 12 zunächst in der ersten Halteeinrichtung 38 der Überführungsvorrichtung 40 verbleibt.

Um die in den Aufnahmeeinrichtungen 70 aufgenommen, unbefüllten Behältnisse 12 aus der ersten Halteeinrichtung 38 herauszuführen, bewegt sich die Movergruppe 60 mit ihren Movern 58 in einer zu den Zinken 42 parallelen Richtung aus dem Überführungsbereich 48 hinaus, wodurch die in den Aufnahmeeinrichtungen 70 aufgenommenen, unbefüllten Behältnisse 12 aus den Zwischenräumen zwischen den Zinken 42 entfernt werden.

Die unbefüllten Behältnisse 12 werden anschließend durch den ersten Anpassungsbereich 62 hindurch transportiert. In dem ersten Anpassungsbereich 62 ändert sich die Position und Ausrichtung der Mover 58 innerhalb der Movergruppe 60 derart, dass die Anordnung der unbefüllten Behältnisse 12 in den Aufnahmen 72 der Aufnahmeeinrichtungen 70 aus der Anlieferungs-Konfiguration in die Maschinenkonfiguration überführt wird, vergleiche Fig. 4 und 5.

Die Maschinenkonfiguration unterscheidet sich von der Anlieferungs-Konfiguration insbesondere durch einen im Vergleich zu dem ersten Abstand 32 und dem Abstand 74 vergrößerten zweiten Abstand 76 der Behältnisse 12, 18. Der zweite Abstand 76 ist für die Maschinenkonfiguration spezifisch. Ein ggf. vorhandener Versatz 28 der Anlieferungs-Konfiguration ist vorzugsweise aufgelöst, also auf "Null" reduziert.

Sobald die unbefüllten Behältnisse 12 in der Maschinenkonfiguration angeordnet sind, können sie in dem ersten Ladebereich 64 von den Aufnahmeeinrichtungen 70 an die erste Ladevorrichtung 66 übergeben werden.

Die erste Ladevorrichtung 66 weist hierfür eine zweite Halteeinrichtung 78 mit kammartigen und entsprechend der Maschinenkonfiguration angeordneten Zinken 80 auf, wobei zwischen benachbarten Zinken 80 jeweils freie Zwischenräume ausgebildet sind. Die der Maschinenkonfiguration entsprechende Anordnung der Zinken 80 geht damit einher, dass benachbarte Zwischenräume zueinander einen Abstand 82 aufweisen, welcher mit dem zweiten Abstand 76 der in den Aufnahmeeinrichtungen 70 angeordneten, unbefüllten Behältnisse 12 übereinstimmt.

Die erste Ladevorrichtung 66 ist entlang einer Hubachse bewegbar. Durch eine Kombination einer Bewegung der ersten Ladevorrichtung 66 entlang Hubachse und einer Bewegung zur Ausrichtung der Movergruppe 60 in einer zu der Antriebsfläche 56 parallelen Ebene ist es daher möglich, die in den Aufnahmeeinrichtungen 70 angeordneten, unbefüllten Behältnisse 12 relativ zu den Zwischenräumen der zweiten Halteeinrichtung 78 auszurichten. Bewegt sich die Movergruppe 60 in den ersten Ladebereich 64 hinein, werden die einzelnen Teilmengen 24, 25 der unbefüllten Behältnisse 12 auf diese Weise jeweils in einem der Zwischenräume aufgenommen, vergleiche Fig. 7.

Mittels einer Hubbewegung der ersten Ladevorrichtung 66 werden die unbefüllten Behältnisse 12 aus den Aufnahmeeinrichtungen 70 entnommen, indem die Zinken 80 den Behälterkragen der Behältnisse 12 untergreifen. Die unbefüllten Behältnisse 12 stützen sich also an den Zinken 80 ab und sind in der zweiten Halteeinrichtung 78 hängend gehalten.

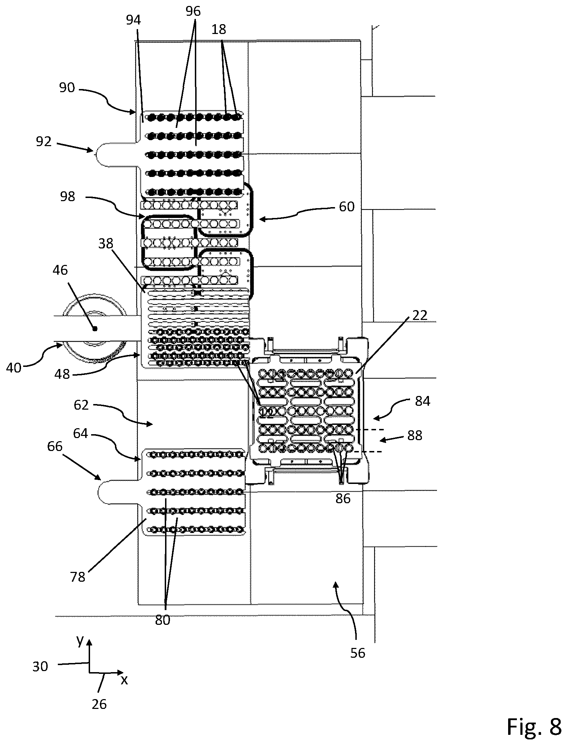

Anschließend bewegt sich die Movergruppe 58 aus dem ersten Ladebereich 64 heraus. Hierdurch wird der erste Ladebereich 64 frei für die Einfahrt des Behältnisträgers 22, vergleiche Fig. 8.

Der Behältnisträger 22 ist Teil einer Transportvorrichtung 83 und ist auf einer der Antriebsfläche 56 abgewandten Seite eines Transportmovers 84 angeordnet, welcher ebenfalls in an sich bekannter Weise schwebend oberhalb der Antriebsfläche 56 gehalten wird und ebenfalls über die Antriebsfläche 56 hinweg bewegbar ist.

Der Behältnisträger 22 weist eine Mehrzahl von Behältnisträgeraufnahmen 86 auf, wobei in jeder Behältnisträgeraufnahme 86 jeweils ein Behältnis 12, 18 aufgenommen werden kann. Die Behältnisträgeraufnahmen 86 sind in einer der Maschinenkonfiguration entsprechenden Anordnung angeordnet. Dies bedeutet, dass zueinander benachbarte Reihen von Behältnisträgeraufnahmen 86 relativ zu einander einen "zweiten" Abstand 88 aufweisen, welcher mit dem Abstand 82 der unbefüllten Behältnisse 12 in der ersten Ladevorrichtung 66 übereinstimmt.

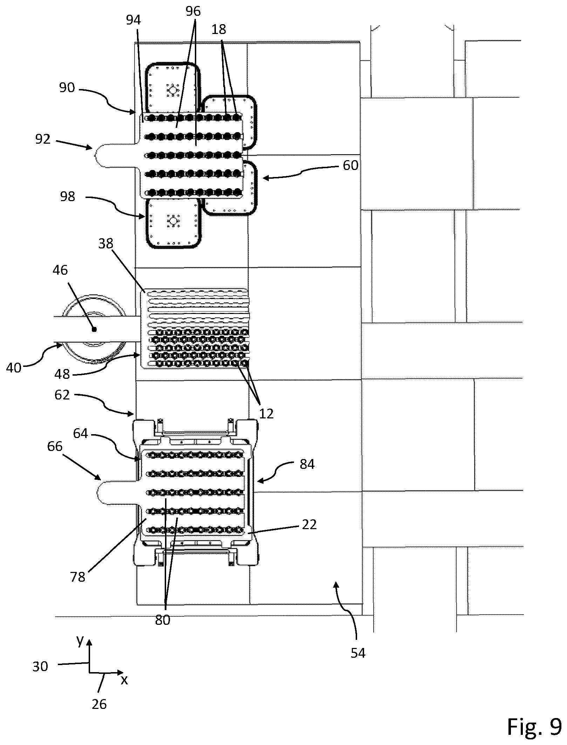

Ist der Behältnisträger 22 in dem ersten Ladebereich 64 angeordnet, werden die in der zweiten Halteeinrichtung 78 gehaltenen, unbefüllten Behältnisse 12 durch Absenken der ersten Ladevorrichtung 66 in die Behältnisträgeraufnahmen 86 geladen, vergleiche Fig. 9.

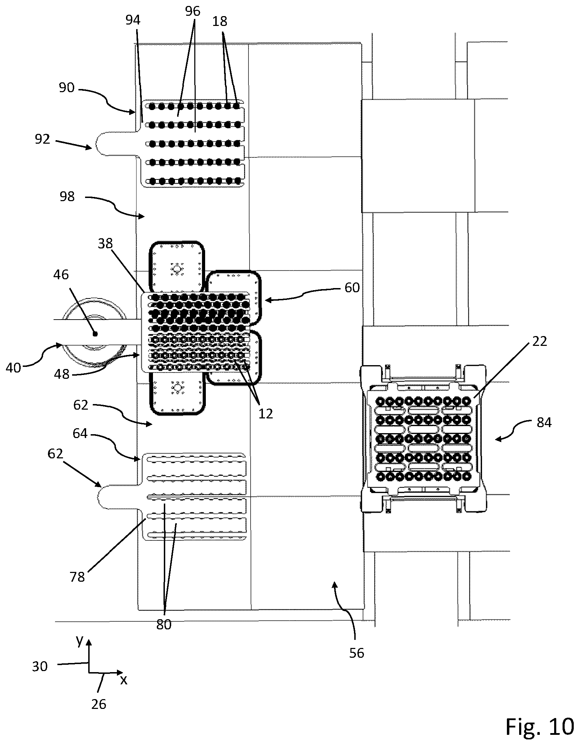

Anschließend werden die unbefüllten Behältnisse 12 aus der zweiten Halteeinrichtung 78 entfernt. Zu diesem Zweck wird der Behältnisträgers 22 von der zweiten Halteeinrichtung 78 weg bewegt, und zwar in einer zu der Erstreckung der Zinken 80 der zweiten Halteeinrichtung 78 parallelen Richtung, vergleiche Fig. 10.

Im Anschluss transportiert der Behältnisträger 22 die unbefüllten Behältnisse 12 entlang des Transportwegs zu der Füllvorrichtung 16, an oder in welcher die unbefüllten Behältnisse 12 befüllt werden, welche somit befüllte Behältnisse 18 bilden.

Anschließend transportiert der Behältnisträger 22 die befüllten Behältnisse 18 zu einem zweiten Ladebereich 90, vergleiche Fig. 6.

In dem zweiten Ladebereich 90 ist eine zweite Ladevorrichtung 92 angeordnet, wobei die zweite Ladevorrichtung 92 eine dritte Halteeinrichtung 94 mit kammartigen und entsprechend der Maschinenkonfiguration angeordneten Zinken 96 aufweist. Die zweite Ladevorrichtung 92 ist entlang einer zu der Antriebsfläche 56 senkrechten Hubachse bewegbar.

In dem zweiten Ladebereich erfolgt eine Übergabe der befüllten Behältnisse 18 von dem Behältnisträger 22 an die dritte Halteeinrichtung 94 der zweiten Ladevorrichtung 92. Die Zinken 96 der dritten Halteeinrichtung 94 untergreifen die Behälterkragen der befüllten Behältnisse 18 und heben die befüllten Behältnisse 18 aus den Behältnisträgeraufnahmen 86 heraus, vergleiche Fig. 7.

Anschließend bewegt sich der Behältnisträger 22 aus dem zweiten Ladebereich 90 heraus, bspw. in Richtung des ersten Ladebereichs 64 (insbesondere um dort neue, unbefüllte Behältnisse 12 zu laden).

Nachdem der Behältnisträger 22 den zweiten Ladebereich freigegeben hat, bewegt sich die Movergruppe 60 in Richtung des zweiten Ladebereichs 90. Dort werden die in dem zweiten Ladebereich 90 angeordneten, befüllten Behältnisse 18 aus der dritten Halteeinrichtung 94 nach unten in die Aufnahmeeinrichtungen 70 der Mover 58 überführt, indem die zweite Ladevorrichtung 92 abgesenkt wird.

Anschließend werden die in den Aufnahmeeinrichtungen 70 aufgenommenen, befüllten Behältnisse 18 mittels der Movergruppe 60 aus der dritten Halteeinrichtung 94 heraus entfernt und durch einen zweiten Anpassungsbereich 98 hindurch in den Überführungsbereich 48 transportiert. Bei der Bewegung durch den zweiten Anpassungsbereich 98 hindurch wird die Anordnung und Lage der Mover 58 derart geändert, dass die Konfiguration der befüllten Behältnisse 18 von der Maschinenkonfiguration (Fig. 5) in die Anlieferungs-Konfiguration (Fig. 4) geändert wird.

In dem Überführungsbereich 48 werden die befüllten Behältnisse 18 an die erste Halteeinrichtung 38 der Überführungsvorrichtung 40 übergeben. Zu diesem Zweck untergreifen die Zinken 42 die die Behälterkragen der befüllten Behältnisse 18 und heben die befüllten Behältnisse 18 aus den Aufnahmeeinrichtungen 70 heraus.

Sobald in der ersten Halteeinrichtung 38 ausschließlich befüllte Behältnisse 18 aufgenommen sind, werden diese befüllten Behältnisse 18 mittels einer 180°-Drehung der Überführungsvorrichtung 40 um die Drehachse 46 aus dem Überführungsbereich 48 abgeführt und können dem Vorratsbehälter 20 übergeben werden.

Um ein möglichst effizientes Behältnisgruppiersystem 10 zu realisieren, kann die zweite Halteeinrichtung 50 der Überführungsvorrichtung 40 bereits während des Befüllens der Behältnisse 12 an oder in der Füllvorrichtung 16 mit neuen, unbefüllten Behältnissen 12 aus dem Behältnisvorrat 15 beladen werden.

Es ist außerdem möglich, nur einen einzigen Ladebereich 64 vorzusehen, der über einen diesem Ladebereich zugeordneten Anpassungsbereich 62 zu dem Überführungsbereich 40 beabstandet ist.

## Patentansprüche

1. Behältnisgruppiersystem (10), umfassend einen Vorratsspeicher (14), wobei Behältnisse (12, 18) in dem Vorratsspeicher (14) einen Behältnisvorrat (15) bilden und in einer Anlieferungs-Konfiguration angeordnet sind, in welcher unterschiedliche Teilmengen (24, 25) der Behältnisse (12, 18) einen der Anlieferungs-Konfiguration entsprechenden ersten Abstand (32) zueinander aufweisen, ferner umfassend einen Behältnisträger (22) und eine Transportvorrichtung (83) zum Transport von in dem Behältnisträger (22) angeordneten Behältnissen (12, 18) entlang eines Transportwegs, wobei die Behältnisse (12, 18) in dem Behältnisträger (22) in einer Maschinenkonfiguration angeordnet sind, in welcher die unterschiedlichen Teilmengen (24, 25) von Behältnissen (12, 18) einen der Maschinenkonfiguration entsprechenden zweiten Abstand (88) zueinander aufweisen, der zu dem der Anlieferungs-Konfiguration entsprechenden ersten Abstand (32) verschieden ist, und wobei entlang des Transportwegs gesehen wenigstens ein Ladebereich (64) mit einer Ladevorrichtung (66) zur Beladung des Behältnisträgers (22) mit unbefüllten Behältnissen (12) und/oder zur Entladung befüllter Behältnisse (18) aus dem Behältnisträger (22) vorgesehen ist, wobei das Behältnisgruppiersystem (10) eine Überführungsvorrichtung (40) zur Zuführung unbefüllter Behältnisse (12) aus dem Behältnisvorrat (15) in einen Überführungsbereich (48) und zur Abführung befüllter Behältnisse (18) aus dem Überführungsbereich (48) in einen Vorratsbehälter (20) aufweist, wobei die Behältnisse (12, 18) in dem Überführungsbereich (48) in der Anlieferungs-Konfiguration angeordnet sind, und wobei der Überführungsbereich (48) und der Ladebereich (64) über mindestens einen Anpassungsbereich (62, 98) hinweg zueinander beabstandet sind, wobei in dem mindestens einen Anpassungsbereich (62, 98) die Konfiguration der Behältnisse (12, 18) zwischen der Anlieferungs-Konfiguration und der Maschinenkonfiguration änderbar ist, wobei in dem mindestens einen Anpassungsbereich (62, 98) wenigstens ein Stator (54) und wenigstens zwei mit dem Stator (54) elektromagnetisch gekoppelte Mover (58) angeordnet sind, wobei die Mover (58) relativ zu einer Antriebsfläche (56) unabhängig voneinander bewegbar antreibbar sind und wobei an einer jeweiligen Oberseite (68) eines Movers (58) eine Aufnahmeeinrichtung (70) zur Aufnahme einer der Teilmengen (24, 25) der Behältnisse (12, 18) angeordnet ist, wobei durch Änderung des Abstands zwischen den Movern (58) die Behältnisse (12, 18) wahlweise in die Maschinenkonfiguration oder in die Anlieferungs-Konfiguration überführbar sind.

2. Behältnisgruppiersystem (10) nach Anspruch 1, **dadurch gekennzeichnet, dass** die Aufnahmeeinrichtungen (70) gemeinsam eine Gesamtzahl von Aufnahmen (72) aufweisen, welche jeweils zur Aufnahme eines Behältnisses (12, 18) dienen, und dass diese Gesamtzahl mindestens so hoch ist wie eine Gesamtzahl von Behältnisträgeraufnahmen (86) des Behältnisträgers (22), wobei die Behältnisträgeraufnahmen (86) jeweils zur Aufnahme eines Behältnisses (12, 18) dienen.

3. Behältnisgruppiersystem (10) nach einem der vorstehenden Ansprüche, **dadurch gekennzeichnet, dass** die Transportvorrichtung (83) einen Transportmover (84) umfasst, der zum Transport des Behältnisträgers (22) entlang des Transportwegs dient und mittels des mindestens einen Stators (54) oder mittels eines weiteren Stators (55) antreibbar ist.

4. Behältnisgruppiersystem (10) nach einem der vorstehenden Ansprüche, **dadurch gekennzeichnet, dass** die Transportvorrichtung (83) eine Mehrzahl von Behältnisträgern (22) umfasst.

5. Behältnisgruppiersystem (10) nach einem der vorstehenden Ansprüche, **dadurch gekennzeichnet, dass** die Überführungsvorrichtung (40) und/oder die Ladevorrichtung (66) entlang einer zu der Antriebsfläche (56) senkrechten Hubachse antreibbar ist oder sind.

6. Behältnisgruppiersystem (10) nach einem der vorstehenden Ansprüche, **dadurch gekennzeichnet, dass** die Überführungsvorrichtung (40) zumindest eine erste Halteeinrichtung (38) mit kammartig und der Anlieferungs-Konfiguration entsprechend angeordneten Zinken (42) aufweist, wobei jeweils zueinander benachbarte Zinken (42) zur Aufnahme jeweils einer der Teilmengen (24, 25) der Behältnisse (12, 18) dienen.

7. Behältnisgruppiersystem (10) nach Anspruch 6, **dadurch gekennzeichnet, dass** die Überführungsvorrichtung (40) zwei erste Halteeinrichtungen (38, 50) aufweist und dass die Überführungsvorrichtung (40) um eine zu der Antriebsfläche (56) senkrecht verlaufenden Drehachse (46) drehbar antreibbar ist.

8. Behältnisgruppiersystem (10) nach einem der vorstehenden Ansprüche, **dadurch gekennzeichnet, dass** die Ladevorrichtung (66) eine zweite Halteeinrichtung (78) mit kammartig und der Maschinenkonfiguration entsprechend angeordneten Zinken (80) aufweist, wobei jeweils zueinander benachbarte Zinken (80) zur Aufnahme jeweils einer der Teilmengen (24, 25) der Behältnisse (12, 18) dienen.

9. Behältnisgruppiersystem (10) nach einem der vorstehenden Ansprüche, **dadurch gekennzeichnet, dass** entlang des Transportwegs gesehen zwei Ladebereiche (64, 90) vorgesehen sind, wobei ein erster Ladebereich (64) über einen ersten Anpassungsbereich (62) hinweg zu dem Überführungsbereich (48) beabstandet ist und wobei ein zweiter Ladebereich (90) über einen zweiten Anpassungsbereich (98) hinweg zu dem Überführungsbereich (48) beabstandet ist.

10. Behältnisgruppiersystem (10) nach Anspruch 9, **dadurch gekennzeichnet, dass** die Behältnisse (12, 18) in dem ersten Anpassungsbereich (64) aus der Anlieferungs-Konfiguration in die Maschinenkonfiguration überführbar sind und dass die Behältnisse (12, 18) in dem zweiten Anpassungsbereich (98) aus der Maschinenkonfiguration in die Anlieferungs-Konfiguration überführbar sind.

11. Verfahren zum Betrieb eines Behältnisgruppiersystems (10) nach einem der Ansprüche 1 bis 10, wobei das Verfahren umfasst:
a) Zuführen von unbefüllten Behältnissen (12) und Vorhalten der unbefüllten Behältnisse (12) in dem Überführungsbereich (48),
b) Aufnahme von zumindest zwei Teilmengen (24, 25) der unbefüllten Behältnisse (12) in unterschiedliche Aufnahmeeinrichtungen (70) unterschiedlicher Mover (58),
c) Bewegung der Mover (58) durch den mindestens einen Anpassungsbereich (62, 98) hindurch, wobei der Abstand der Mover (58) zueinander geändert wird, wodurch die Behältnisse (12) aus der Anlieferungs-Konfiguration in die Maschinenkonfiguration überführt werden,
d) Einfahrt der Mover (58) in den Ladebereich (64), Entnahme der unbefüllten Behältnisse (12) aus den Aufnahmeeinrichtungen (70) der Mover (58) und Übergabe an die Ladevorrichtung (66),
e) Ausfahrt der Mover (58) aus dem Ladebereich (64),
f) Einfahrt des Behältnisträgers (22) in den Ladebereich (64) und Beladen des Behältnisträgers (22) mit den unbefüllten Behältnissen (12),
g) Transport der unbefüllten Behältnisse (12) entlang des Transportwegs und Befüllung der Behältnisse (12),
h) Einfahrt des Behältnisträgers (22) in den Ladebereich (64), Entladen der befüllten Behältnisse (18) aus dem Behältnisträger (22) und Übergabe an die Ladevorrichtung (66),
i) Ausfahrt des Behältnisträgers (22) aus dem Ladebereich (64),
j) Einfahrt der Mover (58) in den Ladebereich (64), Aufnahme der befüllten Behältnisse (18) in die Aufnahmeeinrichtungen (70) der Mover (58),
k) Bewegung der Mover (58) durch den mindestens einen Anpassungsbereich (62, 98) hindurch, wobei der Abstand der Mover (58) zueinander geändert wird, wodurch die befüllten Behältnisse (18) aus der Maschinenkonfiguration in die Anlieferungs-Konfiguration überführt werden,
l) Einfahrt der Mover (58) in den Überführungsbereich (48), Entnahme der befüllten Behältnisse (18) aus den Aufnahmeeinrichtungen (70) der Mover (58) und Übergabe in den Überführungsbereich (48),
m) Abführen der befüllten Behältnisse (18) aus dem Überführungsbereich (48).

12. Verfahren nach Anspruch 11 bei Rückbezug auf Anspruch 9 oder 10, **dadurch gekennzeichnet, dass** - gemäß c) - die unbefüllten Behältnisse (12) in dem ersten Anpassungsbereich (62) aus der Anlieferungs-Konfiguration in die Maschinenkonfiguration überführt werden und dass gleichzeitig - gemäß h) - befüllte Behältnisse (18) aus dem Behältnisträger (22) entladen und in den zweiten Ladebereich (90) übergeben werden.

## Claims

1. Container grouping system (10) comprising a supply store (14), wherein containers (12, 18) in the supply store (14) form a container supply (15) and are arranged in a delivery configuration, in which different batches (24, 25) of the containers (12, 18) are at a first distance (32) with respect to one another corresponding to the delivery configuration, further comprising a container carrier (22) and a transport apparatus (83) for transporting containers (12, 18) arranged in the container carrier (22) along a transport path, wherein the containers (12, 18) in the container carrier (22) are arranged in a machine configuration, in which the different batches (24, 25) of containers (12, 18) are at a second distance (88) with respect to one another corresponding to the machine configuration and different from the first distance (32) corresponding to the delivery configuration, and wherein, viewed along the transport path, at least one loading region (64) is provided comprising a loading apparatus (66) for loading the container carrier (22) with empty containers (12) and/or for unloading filled containers (18) from the container carrier (22), wherein the container grouping system (10) comprises a transfer apparatus (40) for feeding empty containers (12) from the container supply (15) into a transfer region (48) and for taking away filled containers (18) from the transfer region (48) into a supply container (20), wherein the containers (12, 18) are arranged in the transfer region (48) in the delivery configuration, and wherein the transfer region (48) and the loading region (64) are spaced apart from one another across at least one adjustment region (62, 98), wherein the configuration of the containers (12, 18) can be changed between the delivery configuration and the machine configuration in the at least one adjustment region (62, 98), wherein at least one stator (54) and at least two movers (58) which are electromagnetically coupled to the stator (54) are arranged in the at least one adjustment region (62, 98), wherein the movers (58) can be driven to move independently of one another relative to a drive surface (56) and wherein a receiving device (70) for receiving one of the batches (24, 25) of the containers (12, 18) is arranged at a relevant upper surface (68) of a mover (58), wherein, by changing the distance between the movers (58), the containers (12, 18) can selectively be transferred into the machine configuration or into the delivery configuration.

2. Container grouping system (10) according to claim 1,
**characterized in that** the receiving devices (70) together have a total number of receptacles (72), each of which is used to receive a container (12, 18), **and in that** this total number is at least as high as a total number of container carrier receptacles (86) of the container carrier (22), wherein the container carrier receptacles (86) are each used to receive a container (12, 18).

3. Container grouping system (10) according to any of the preceding claims,
**characterized in that** the transport apparatus (83) comprises a transport mover (84) which is used to transport the container carrier (22) along the transport path and which can be driven by means of the at least one stator (54) or by means of a further stator (55).

4. Container grouping system (10) according to any of the preceding claims,
**characterized in that** the transport apparatus (83) comprises a plurality of container carriers (22).

5. Container grouping system (10) according to any of the preceding claims,
**characterized in that** the transfer apparatus (40) and/or the loading apparatus (66) can be driven along a lifting axis perpendicular to the drive surface (56).

6. Container grouping system (10) according to any of the preceding claims,
**characterized in that** the transfer apparatus (40) comprises at least one first holding device (38) having comb-like teeth (42) arranged according to the delivery configuration, wherein adjacent teeth (42) in each case are used to receive in each case one of the batches (24, 25) of the containers (12, 18).

7. Container grouping system (10) according to claim 6,
**characterized in that** the transfer apparatus (40) has two first holding devices (38, 50) **and in that** the transfer apparatus (40) is rotatably drivable about an axis of rotation (46) which extends perpendicularly to the drive surface (56).

8. Container grouping system (10) according to any of the preceding claims,
**characterized in that** the loading apparatus (66) comprises a second holding device (78) having comb-like teeth (80) arranged according to the machine configuration, wherein adjacent teeth (80) in each case are used to receive in each case one of the batches (24, 25) of the containers (12, 18).

9. Container grouping system (10) according to any of the preceding claims,
**characterized in that** two loading regions (64, 90) are provided viewed along the transport path, wherein a first loading region (64) is spaced with respect to the transfer region (48)across a first adjustment region (62) and wherein a second loading region (90) is spaced with respect to the transfer region (48) across a second adjustment region (98).

10. Container grouping system (10) according to claim 9,
**characterized in that** the containers (12, 18) in the first adjustment region (64) can be transferred from the delivery configuration into the machine configuration **and in that** the containers (12, 18) in the second adjustment region (98) can be transferred from the machine configuration into the delivery configuration.

11. Method for operating a container grouping system (10) according to any of claims 1 to 10, wherein the method comprises:
a) empty containers (12) being fed and the empty containers (12) being held available in the transfer region (48),
b) at least two batches (24, 25) of the empty containers (12) being received into different receiving devices (70) of different movers (58),
c) the movers (58) moving through the at least one adjustment region (62, 98), wherein the distance of the movers (58) with respect to one another is changed, as a result of which the containers (12) are transferred from the delivery configuration into the machine configuration,
d) the movers (58) entering into the loading region (64), the empty containers (12) being removed from the receiving devices (70) of the movers (58) and transferred to the loading apparatus (66),
e) the movers (58) exiting from the loading region (64),
f) the container carrier (22) entering into the loading region (64) and the container carrier (22) being loaded with the empty containers (12),
g) the empty containers (12) being transported along the transport path and the containers (12) being filled,
h) the container carrier (22) entering into the loading region (64), the filled containers (18) being unloaded from the container carrier (22) and transferred to the loading apparatus (66),
i) the container carrier (22) exiting from the loading region (64),
j) the movers (58) entering into the loading region (64), the filled containers (18) being received into the receiving devices (70) of the movers (58),
k) the movers (58) moving through the at least one adjustment region (62, 98), wherein the distance of the movers (58) with respect to one another is changed, as a result of which the filled containers (18) are transferred from the machine configuration into the delivery configuration,
l) the movers (58) entering into the transfer region (48), the filled containers (18) being removed from the receiving devices (70) of the movers (58) and transferred into the transfer region (48),
m) the filled containers (18) being taken away from the transfer region (48).

12. Method according to claim 11 with reference to claim 9 or 10,
**characterized in that** - according to c) - the empty containers (12) in the first adjustment region (62) are transferred from the delivery configuration into the machine configuration **and in that** simultaneously - according to h) - filled containers (18) are unloaded from the container carrier (22) and transferred to the second loading region (90).

## Revendications

1. Système de regroupement de récipients (10) comprenant un accumulateur de réserve (14), dans lequel des récipients (12, 18) forment une réserve de récipients (15) dans l'accumulateur de réserve (14) et sont agencés selon une configuration de distribution dans laquelle différents sous-ensembles (24, 25) des récipients (12, 18) présentent entre eux un premier espacement (32) correspondant à la configuration de distribution, comprenant en outre un support de récipients (22) et un dispositif de transport (83) destiné au transport de récipients (12, 18) agencés dans le support de récipients (22) le long d'un trajet de transport, dans lequel les récipients (12, 18) sont agencés dans le support de récipients (22) selon une configuration de machine dans laquelle les différents sous-ensembles (24, 25) de récipients (12, 18) présentent entre eux un second espacement (88) correspondant à la configuration de machine, lequel second espacement est différent du premier espacement (32) correspondant à la configuration de distribution, et dans lequel, vu le long du trajet de transport, au moins une zone de chargement (64) est prévue avec un dispositif de chargement (66) destiné au chargement du support de récipients (22) comportant des récipients (12) vides et/ou au déchargement de récipients (18) remplis du support de récipients (22), dans lequel le système de regroupement de récipients (10) présente un dispositif de transfert (40) destiné à l'acheminement de récipients (12) vides depuis la réserve de récipients (15) vers une zone de transfert (48) et à l'évacuation de récipients (18) remplis de la zone de transfert (48) vers un récipient de réserve (20), dans lequel les récipients (12, 18) sont agencés dans la zone de transfert (48) selon la configuration de distribution, et dans lequel la zone de transfert (48) et la zone de chargement (64) sont espacées l'une de l'autre par l'intermédiaire d'au moins une zone d'ajustement (62, 98), dans lequel la configuration des récipients (12, 18) peut être modifiée, dans l'au moins une zone d'ajustement (62, 98), entre la configuration de distribution et la configuration de machine, dans lequel, dans l'au moins une zone d'ajustement (62, 98), sont agencés au moins un stator (54) et au moins deux navettes (58) couplées électromagnétiquement au stator (54), dans lequel les navettes (58) peuvent être entraînées en déplacement indépendamment les unes des autres par rapport à une surface d'entraînement (56), et dans lequel un moyen de réception (70) destiné à la réception de l'un des sous-ensembles (24, 25) des récipients (12, 18) est agencé sur un côté supérieur (68) respectif d'une navette (58), dans lequel les récipients (12, 18) peuvent être transférés, au choix, dans la configuration de machine ou dans la configuration de distribution par modification de l'espacement entre les navettes (58).

2. Système de regroupement de récipients (10) selon la revendication 1,
**caractérisé en ce que** les moyens de réception (70) présentent ensemble un nombre total de logements (72) destinés respectivement à la réception d'un récipient (12, 18), **et en ce que** ce nombre total est au moins égal au nombre total de logements de supports de récipients (86) du support de récipients (22), dans lequel les logements de supports de récipients (86) servent respectivement à la réception d'un récipient (12, 18).

3. Système de regroupement de récipients (10) selon l'une des revendications précédentes, **caractérisé en ce que** le dispositif de transport (83) comprend une navette de transport (84) qui sert au transport du support de récipients (22) le long du trajet de transport et qui peut être entraînée par le biais de l'au moins un stator (54) ou par le biais de l'autre stator (55).

4. Système de regroupement de récipients (10) selon l'une des revendications précédentes, **caractérisé en ce que** le dispositif de transport (83) comprend une pluralité de supports de récipients (22).

5. Système de regroupement de récipients (10) selon l'une des revendications précédentes, **caractérisé en ce que** le dispositif de transfert (40) et/ou le dispositif de chargement (66) peut ou peuvent être entraîné(s) le long d'un axe de course perpendiculaire à la surface d'entraînement (56).

6. Système de regroupement de récipients (10) selon l'une des revendications précédentes, **caractérisé en ce que** le dispositif de transfert (40) présente au moins un premier moyen de retenue (38) comportant des dents (42) agencées en peigne et correspondant à la configuration de distribution, dans lequel les dents (42) respectivement adjacentes les unes aux autres servent à la réception respectivement d'un des sous-ensembles (24, 25) des récipients (12, 18).

7. Système de regroupement de récipients (10) selon la revendication 6,
**caractérisé en ce que** le dispositif de transfert (40) présente deux premiers moyens de retenue (38, 50) **et en ce que** le dispositif de transfert (40) peut être entraîné en rotation autour d'un axe de rotation (46) s'étendant perpendiculairement à la surface d'entraînement (56).

8. Système de regroupement de récipients (10) selon l'une des revendications précédentes, **caractérisé en ce que** le dispositif de chargement (66) présente un second moyen de retenue (78) comportant des dents (80) agencées en peigne et correspondant à la configuration de machine, dans lequel les dents (80) respectivement adjacentes les unes aux autres servent à la réception respectivement d'un des sous-ensembles (24, 25) des récipients (12, 18).

9. Système de regroupement de récipients (10) selon l'une des revendications précédentes, **caractérisé en ce que,** vu le long du trajet de transport, deux zones de chargement (64, 90) sont prévues, dans lequel une première zone de chargement (64) est espacée de la zone de transfert (48) par l'intermédiaire d'une première zone d'ajustement (62), et dans lequel une seconde zone de chargement (90) est espacée de la zone de transfert (48) par l'intermédiaire d'une seconde zone d'ajustement (98).

10. Système de regroupement de récipients (10) selon la revendication 9,
**caractérisé en ce que** les récipients (12, 18) peuvent être transférés, dans la première zone d'ajustement (64), de la configuration de distribution à la configuration de machine, **et en ce que** les récipients (12, 18) peuvent être transférés, dans la seconde zone d'ajustement (98), de la configuration de machine à la configuration de distribution.

11. Procédé permettant de faire fonctionner un système de regroupement de récipients (10) selon l'une des revendications 1 à 10, dans lequel le procédé comprend :
a) l'acheminement de récipients (12) vides et la mise à disposition des récipients (12) vides dans la zone de transfert (48),
b) le logement d'au moins deux sous-ensembles (24, 25) des récipients (12) vides dans différents moyens de réception (70) de différentes navettes (58),
c) le déplacement des navettes (58) à travers l'au moins une zone d'ajustement (62, 98), dans lequel l'espacement entre les navettes (58) est modifié, moyennant quoi les récipients (12) sont transférés de la configuration de distribution à la configuration de machine,
d) l'entrée des navettes (58) dans la zone de chargement (64), le retrait des récipients (12) vides des moyens de réception (70) des navettes (58) et le transfert vers le dispositif de chargement (66),
e) la sortie des navettes (58) de la zone de chargement (64),
f) l'entrée du support de récipients (22) dans la zone de chargement (64) et le chargement du support de récipients (22) avec les récipients (12) vides,
g) le transport des récipients (12) vides le long du trajet de transport, et le remplissage des récipients (12),
h) l'entrée du support de récipients (22) dans la zone de chargement (64), le déchargement des récipients (18) remplis du support de récipients (22) et le transfert vers le dispositif de chargement (66),
i) la sortie du support de récipients (22) de la zone de chargement (64),
j) l'entrée des navettes (58) dans la zone de chargement (64), la réception des récipients (18) remplis par les moyens de réception (70) des navettes (58),
k) le déplacement des navettes (58) à travers l'au moins une zone d'ajustement (62, 98), dans lequel l'espacement entre les navettes (58) est modifié, moyennant quoi les récipients (18) remplis sont transférés de la configuration de machine à la configuration de distribution,
l) l'entrée des navettes (58) dans la zone de transfert (48), le retrait des récipients (18) remplis des moyens de réception (70) des navettes (58) et le transfert vers la zone de transfert (48),
m) l'évacuation des récipients (18) remplis hors de la zone de transfert (48).

12. Procédé selon la revendication 11 lorsqu'elle dépend de la revendication 9 ou 10, **caractérisé en ce que**, conformément au point c), les récipients (12) vides sont transférés, dans la première zone d'ajustement (62), de la configuration de distribution à la configuration de machine, **et en ce que**, de manière concomitante, conformément au point h), les récipients (18) remplis sont déchargés du support de récipients (22) et transférés vers la seconde zone de chargement (90).
